# EUROPEAN PATENT APPLICATION

(11) **EP 4 539 493 A1**
(43) Date of publication of application: **16.04.2025**
(21) Application number: 22949250.9
(22) Date of filing: 27.06.2022
(51) Int. Cl.: H04Q 9/00

(54) **CONTROL/MONITORING SIGNAL TRANSFERRING SYSTEM**

(71) Applicant: Anywire Corporation, Nagaokakyo-shi, Kyoto 617-8550 (JP)
(72) Inventor: HAMANAKA, Junichi, Nagaokakyo-shi, Kyoto 617-8550 (JP)
(74) Representative: Gulde & Partner
(86) International application number: PCT/JP2022/025458
(87) International publication number: WO 2024/003971

(57) **Abstract**

A master station that transmits and receives data to and from a control part, and a plurality of remote stations that transmit and receive data to and from the master station by a transmission synchronization method via a common transmission line are comprised. A frame repeatedly transmitted from the master station is time divided. Control and monitoring data range wherein the transmission direction of the data is determined and allocated to each of the remote stations, and management data range for use in data transfer with all of the remote stations are provide. Numerical value as an address for obtaining the timing of the data range allocated to the own station in the control and monitoring data range is set for each of the remote stations. The master station transmits a comparison identifier using the management data range at timing when a process for recognizing the address is executed. The remote station enables data transfer using the control and monitoring data range when receiving the comparison identifier, stores the comparison identifier, and when the operation identifier is transmitted from the master station, enables or disables data transfer using the control and monitoring data range basing on a result of comparison between the operation identifier and the comparison identifier

## Description

### TECHNICAL FIELD

The present invention relates to a control and monitoring signal transmission system wherein a signal line between a master station provided on a control side and a plurality of remote stations provided on a controlled side is reduced in wiring, connected by a common transmission line, and data is transmitted by a transmission synchronization method such as synchronizing with a transmission clock.

In a system for centrally controlling a large number of devices arranged in a facility, a so-called wiring saving, in which the number of wirings is reduced, is widely implemented. Then, as a general method of the wiring saving, to replace the parallel connection directly connecting each of a plurality of devices provided on the controlled side to the control unit provided on the control side, it has been widely adopted a system wherein a master station and a plurality of remote stations having a conversion function of a parallel signal and a serial signal, respectively connected to the control unit and a plurality of devices, and, the master station and a plurality of remote stations perform transmitting and receiving data by using a serial signal via a common transmission line between a plurality of remote stations. Further, as a method of transmitting and receiving data by using a serial signal via a common transmission line, a transmission synchronization method such as synchronizing with a transmission clock is often adopted.

As a method of transmitting and receiving data by using a serial signal via a common transmission line, a transmission synchronization method such as synchronizing with a transmission clock is known. A method of transmitting and receiving data between a master station and a plurality of remote stations by synchronizing data using a series pulse signal (hereinafter referred to as a "transmission clock signal") is widely adopted.

In a method of transmitting and receiving data in synchronization with a transmission clock signal, a frame repeatedly transmitted from a master station is time-divided, a data range wherein a data transmission direction (transmission from a master station to a remote station or transmission from a remote station to a master station) is determined is allocated to each of a plurality of remote stations, and data is superimposed on the data range. Further, the address of the numerical representation for obtaining the timing of the data range allocated to the own station is set in each remote station, each of the plurality of remote stations by transmitting and receiving data to and from the master station in the data range allocated to the own station, it is possible to prevent collision of transmission and reception of a plurality of remote stations.

On the other hand, the address set in the remote station can be used for other objectives in addition to the collision prevention of transmission and reception of a plurality of remote stations. For example, in the remote wiring check system disclosed in JP-A-2011-114449, which is proposed by the applicant, separately from the data range allocated to each slave station, a common data range (hereinafter, referred to as a management data range) for use in data exchange with all remote stations is used, and the wiring connection state between the remote station and the controlled device can be confirmed by the master station side without going directly to the remote site where wiring is installed.

### PRIOR ART DOCUMENTS

### PATENT DOCUMENT

[Patent Document 1] JP-A-2011-114449

### SUMMARY OF THE INVENTION

### PROBLEM TO BE SOLVED BY THE INVENTION

However, in a method wherein an address of a numerical representation for obtaining a timing of a data range allocated to each remote station is set and each of the plurality of remote stations transmits and receives data to and from the master station in a data range allocated to the remote station, when a control target device installed on the controlled side is changed and a remote station (hereinafter, referred to as an "address unrecognized remote station") whose address is not recognized by the master station is included, the device associated with the address unrecognized remote station may malfunction.

For example, even when an address overlapping with an address corresponding to a data range allocated to an existing remote station is accidentally set to an address unrecognized remote station, the address unrecognized remote station can transmit and receive data using the data range, so that the device corresponding to the address unrecognized remote station also operates. However, the operation of the device is not intended, i.e. it is a malfunction.

Therefore, the present invention provides a control and monitoring system capable of preventing a malfunction of a device related to an address unrecognized remote station in a method of transmitting and receiving data in synchronization with a transmission clock signal.

### MEANS FOR SOLVING THE PROBLEMS

A control and monitoring signal transmission system according to the present invention comprises a master station that transmits and receives data to and from a control part, and a plurality of remote stations that transmit and receive data to and from the master station by a transmission synchronization method via a common transmission line. Transmitting and receiving data between the master station and the remote stations is performed by superimposing data on a frame repeatedly transmitted from the master station, the frame is time divided, control and monitoring data range wherein the transmission direction of the data is determined and allocated to each of the remote stations is provided, management data range for use in data transfer with all of the remote stations is provided separately from the control and monitoring data range, numerical value as an address for obtaining the timing of the data range allocated to the own station in the control and monitoring data range is set for each of the remote stations. The master station transmits a comparison identifier using the management data range at timing when a process for recognizing the address is executed. The remote station enables data transfer using the control and monitoring data range when receiving the comparison identifier, stores the comparison identifier, and when the operation identifier is transmitted from the master station, the remote station enables or disables data transfer using the control and monitoring data range basing on a result of comparison between the operation identifier and the comparison identifier.

### EFFECT OF THE INVENTION

According to the present invention, since the remote station enables data transfer using the control and monitoring data range when receiving the comparison identifier transmitted from the master station at the timing when the processing for recognizing the address is executed, the address unrecognized remote station that does not receive the comparison identifier does not perform data transfer using the control and monitoring data range. Therefore, even when an address overlapping with an address corresponding to a data range allocated to an existing remote station is accidentally set to the address unrecognized remote station, malfunction of the device associated with the address unrecognized remote station can be prevented.

### BRIEF DESCRIPTION OF THE FIGURES

[Fig. 1] It is a system configuration diagram of an embodiment of a control and monitoring signal transmission system according to the present invention, wherein (a) is a diagram showing the configuration before modification and (b) is a diagram showing the configuration after modification.
[Fig. 2] It is a functional block diagram of the master station.
[Fig. 3] It is a time chart of a transmission signal.
[Fig. 4] It is a schematic diagram showing a transmission procedure of the transmission signal.
[Fig. 5] It is a functional block diagram of the input remote station.
[Fig. 6] It is a functional block diagram of the output remote station.

### DESCRIPTION OF EMBODIMENTS

Embodiments of a control and monitoring signal transmission system according to the present invention will be described.

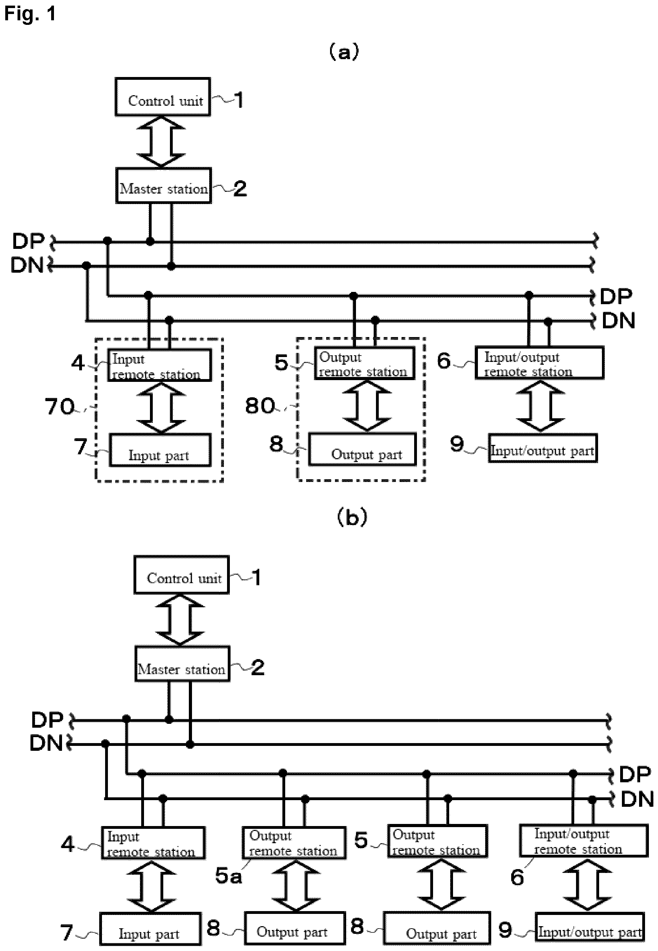

This control and monitoring signal transmission system is for centrally controlling a large number of devices arranged in a facility such as a factory in a control unit. As illustrated in FIG. 1, it is configured with a master station 2 connected to a control unit 1 and a common-data-signal line DP, DN (hereinafter referred to as a transmission line), a plurality of input remote stations 4, output remote stations 5 and input/output remote stations 6 arranged in a facility to be controlled and connected to a transmission line. In FIG. 1, for convenience of illustration, each remote station is shown one by one, but the type and numbers of remote stations connected to the transmission line are not limited. Further, for convenience of illustration, all of the remote stations configuring the system are not shown in FIG. 1.

The input part 7 to which the input remote station 4 is connected, the output part 8 to which the output remote station 5 is connected, and the input/output part 9 to which the input/output remote station 6 is connected are devices arranged in a facility to be controlled.

Examples of the input part 7 include, but are not limited to, a reed switch, a micro switch, a push button switch, a photoelectric switch, and various other sensors.

Examples of the output part 8 include, but are not limited to, an actuator, a (stepping) motor, a solenoid, a solenoid valve, a relay, a thyristor, and a lamp.

The input/output part 9 is a device having the functions of both the input part 7 and the output part 8. For example, a device such as a temperature controller, a timer, and a counter that has both a function of transmitting information to the master station 2 and a function of performing an output operation based on data transmitted from the master station 2 can be cited.

The input part 7 may be an input part integrated remote station 70 integrated with the input remote station 4. Further, the output unit 8 may be an output part integrated remote station 80 integrated with the output remote station 5.

The control unit 1 includes a management determining part 11 having an arithmetic processing function and an input/output unit 12. The management determining part 11 receives data from the master station 2 via the input/output unit 12, and performs necessary arithmetic processing based on a program stored therein.

### <Master station configuration>

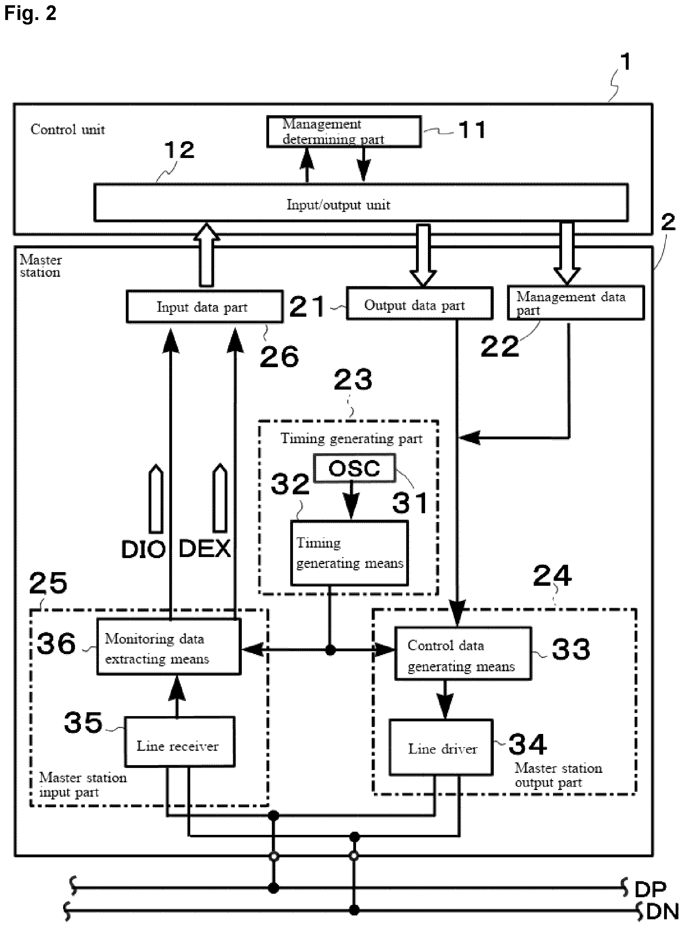

The master station 2 is connected to a transmission line, and as shown in FIG. 2, includes an output data part 21, a management data part 22, a timing generating part 23, a master station output part 24, a master station input part 25, and an input data part 26. Then, the control data is output as it is included in the voltage clock signal having a predetermined cycle and duty ratio, and the monitoring data output from the input remote station 4, the output remote station 5 and the input/output remote station 6 (hereinafter, these may be collectively referred to as "child stations 4, 5, and 6." ) is extracted, and is output to the input/output unit 12 of the control unit 1.

The output data part 21 passes the data received from the control unit 1 as serial data to the master station output part 24.

Basing on the data received from the control unit 1, the management data part 22 passes data necessary for instruction by a management control data range to the remote station, as serial data, to the master station output part 24, which range is to be described later.

The timing generating part 23 is composed of an oscillation circuit (OSC) 31 and timing generating means 32, timing generating means 32 generates a timing clock of the system basing on the oscillation circuit (OSC) 31 and passes the generated timing clock to the master station output part 24 and the master station input part 25.

The master station output part 24 is composed of a control data generating means 33 and a line driver 34. The control data generating means 33 outputs a voltage clock signal including control data to the transmission line via the line driver 34 basing on the data received from the output data part 21 and the timing clock received from the timing generating part 23.

In this embodiment, a voltage clock signal is used as the transmission clock signal, which conveys the timing clock using a change in voltage. However, the method of transmitting the timing clock is not limited, and other methods suitable for use conditions may be used.

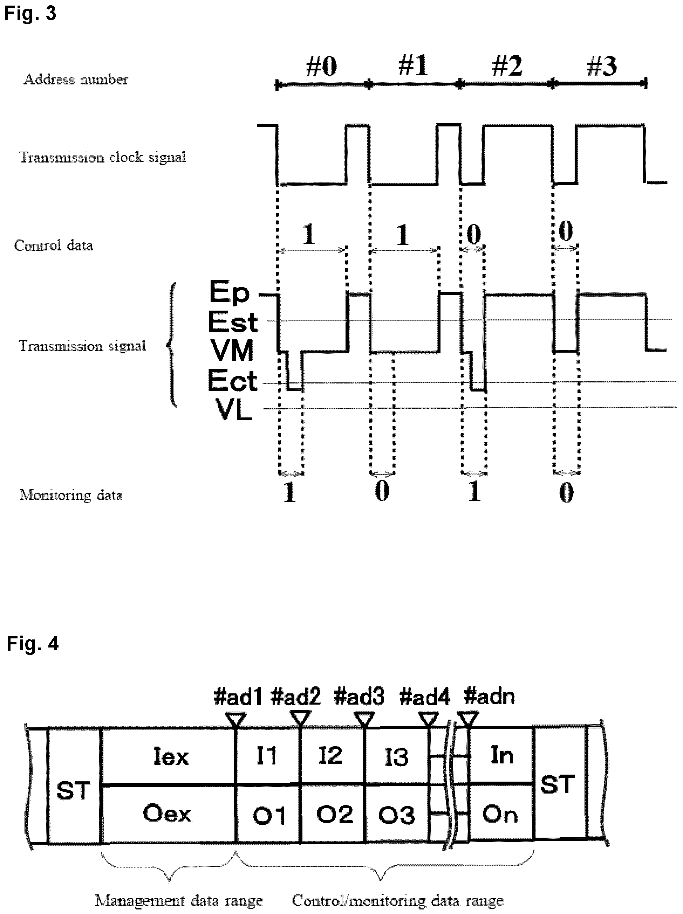

The voltage clock signal is composed of a plurality of clock pulses. Each of the clock pulses has a period (hereinafter, referred to as a "high period") wherein the voltage level is Ep being higher than the threshold Est, as in the transmission signal illustrated in FIG. 3. In this embodiment, the voltage level Ep is set to +24V.

Although the high period functions as a synchronous clock and a power supply voltage for communication, the width and the voltage level are not limited to this embodiment as long as they satisfy these conditions. It can be determined as appropriate according to the use environment and the use state. For example, the voltage level may be a negative voltage being maintained lower than the ground level for a predetermined period of time.

Each of the clock pulses also has a data pulse to be used for data transmission between the master station 2 and the remote stations 4, 5, 6.

In this embodiment, the data value is indicated by the voltage level in each of the data pulses. However, the voltage level indicating the data value can be appropriately determined in accordance with the use environment and the use state. For example, the voltage level may be a negative voltage being lower than the ground level.

In the data pulse of this embodiment, the data value is indicated by a voltage level lower than the voltage level Ep. Then, the voltage potential VL lower than the threshold value Ect is set as the voltage level to indicate the logical data value "1", and the voltage potential VM higher than the threshold value Ect is set as the voltage level to indicate the logical data value "0". Further, in this embodiment, the threshold Ect is set (approximately 6V) between 10V and the ground level, but the potential thereof is not limited, and may be set according to the use state or the use environment. The correspondence relationship between the voltage level to indicate the data value and the logical data value is not limited, and can be appropriately determined according to the use environment and the use state.

In this embodiment, the data is also indicated by the duration of the data pulse. In this embodiment, when the period from the rising edge of the high period to the rising edge of the next arriving high period is set as one cycle t0, the time of the high period (3/4)t0 indicates logical data "1" and the time (1/4)t0 indicates logical data "0". As long as the time corresponds to the value of the control data input from the control unit 1, the length thereof is not limited and may be appropriately determined.

The voltage clock signal is repeatedly transmitted from the master station 2 using a series of lengths of a predetermined number of high period as one frame. As shown in FIG. 4, a management data range and a control/monitoring data range are provided in one frame.

Further, a start signal ST wherein the voltage level Ep of the high period is maintained for a longer period than the high period is transmitted to the head of the frame, and the frames are separated from each other. The length of the start signal ST is not limited as long as it can be distinguished from the high period, and can be appropriately determined in view of the use conditions and the like.

In the control/monitoring data range, a predetermined range is allocated to each of the input remote station 4, the output remote station 5, and the input/output remote station 6. Then, the control data for the output remote station 5 and the input/output remote station 6 from the master station 2 is superimposed on the range allocated to the target remote station, or the monitoring data for the master station 2 from the input remote station 4 and the input/output remote station 6 is superimposed on the range allocated to the remote station transmitting the monitoring data. The control/monitoring data range is used for transmitting and receiving the steady data between the master station 2 and the remote stations 4, 5, and 6 as described.

The management data range is used for transmitting and receiving non-steady data that cannot be transmitted and received by using the control/monitoring data range. The comparison identifier and the operation identifier of the present invention are transmitted using the management data range, and details of the transmission procedure will be described later.

The management data range is also used to execute processing for recognizing the addresses of the remote stations 4, 5, and 6. Specifically, first, the master station 2 sequentially designates all the numerical values that can be set as addresses of the remote stations 4, 5, and 6. Upon receiving this, the remote stations 4, 5, and 6 transmit a response to the master station 2 using the management data range when the numerical value specified in the management data range matches the address set in the own station. Then, the master station 2 recognizes the addresses of all the remote stations 4, 5, and 6 basing on the presence or absence of this response. That is, it is recognized the presence of the remote stations 4, 5, and 6 those being set the numeric value to which the response was made as the address.

The master station input part 25 is composed of a line receiver 35 and a monitoring data extracting means 36. The line receiver 35 receives the voltage clock signal from the transmission line, performs waveform shaping, and passes it to the monitoring data extracting means 36.

The monitoring data extracting means 36 obtains timing for extracting a data value using the timing clock received from the timing generating part 23, and extracts data basing on the digital value of the voltage level of the voltage clock signal received from the line receiver 35. Then, it passes the steady data DIO superimposed on the control/monitoring data range and the management data DEX superimposed on the management data range to the input data part 26.

The input data part 26 converts the serial input data received from the monitoring data extracting means 36 into parallel data, and outputs the parallel data as monitoring data and management monitoring data to the input/output unit 12 of the control unit 1.

### <Input remote station configuration>

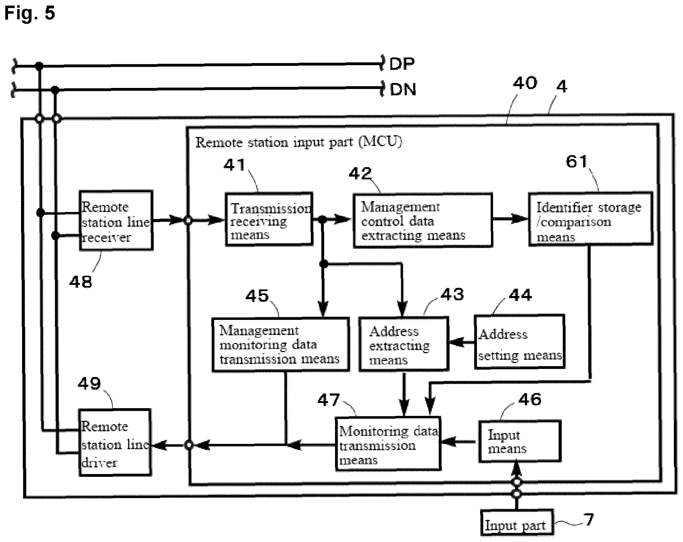

As shown in FIG. 5, the input remote station 4 comprises a remote station input part 40 for executing main arithmetic processing, and a remote station line receiver 48 and a remote station line driver 49 disposed between the remote station input part 40 and the transmission line, receives a voltage clock signal from the transmission line via the remote station line receiver 48, and outputs a monitoring signal to the transmission line via the remote station line driver 49.

The remote station input part 40 has a transmission receiving means 41, a management control data extracting means 42, an address extracting means 43, an address setting means 44, a management monitoring data transmission means 45, an input means 46, a monitoring data transmission means 47, and identifier storage/comparison means 61.

Incidentally, the input remote station 4 of this embodiment comprises a MCU which is a microcomputer control unit as an internal circuit, and this MCU functions as the remote station input part 40.

The remote station line receiver 48 receives a voltage clock signal from the transmission line, performs waveform shaping, and passes the signal to the transmission receiving means 41.

The transmission receiving means 41 determines the voltage level comparing to the threshold Est and the threshold Ect, and passes the digital value of the voltage level of the voltage clock signal, which digital value is received from the remote station line receiver 48, to the management control data extracting means 42, to the address extracting means 43, and to the management monitoring data transmission means 45.

The management control data extracting means 42 determines the start signal ST basing on the digital value of the voltage level of the voltage clock signal. Then, starting from the timing wherein the start signal ST ends (falling edge in this embodiment), the control data is extracted basing on the digital value of the voltage level of the data I/O range in the management data range. The extracted management data is passed over to processing means wherein processes basing on the data are executed. In FIG. 5, an identifier storage/comparison means 61 is shown as a processing means in case where the comparison identifier or the operation identifier is management data, but the illustration of other processing means is omitted.

The address extracting means 43 determines the start signal ST basing on the digital value of the voltage level of the voltage clock signal, and counts the high period starting from the timing wherein the start signal ST ends (falling edge in this embodiment). Then, a timing wherein the count value matches the own station address data set by the address setting means 44 is obtained. Note that this timing is a timing (hereinafter, referred to as "own station range start timing") wherein the data range allocated to the own station in the control/monitoring data range (hereinafter, referred to as "own station range") starts.

Then, the address extracting means 43 having obtained the own station range start timing enables the monitoring data transmission means 47. Further, in the case where the own station range is composed of a plurality of data pulse, the monitoring data transmission means 47 is enabled until the own station range ends.

The management monitoring data transmission means 45 determines the start signal ST basing on the digital value of the voltage level of the transmission signal. Then, starting from the timing wherein the start signal ST ends, it outputs a monitoring data required in the management data range.

Note that the monitoring data output from the management monitoring data transmission means 45 is transmitted only in the case where a data to be transmitted to the master station 2 is received from processing means.

The input means 46 passes the data basing on the input from the input part 7 to the monitoring data transmission means 47.

The monitoring data transmission means 47 being enabled by identifier storage/comparison means 61 outputs the data received from the input means 46 as a monitoring data via the remote station line driver 49 in the case where being enabled by the address extracting means 43.

The identifier storage/comparison means 61 stores the comparison identifier in case wherein the comparison identifier is received from the management control data extraction means 42, and enables the monitoring data transmission means 47. Further, in case wherein the operation identifier is received, the operation identifier and comparison identifier are compared. Then after execution of comparison, in case the operation identifier and the comparison identifier are inconsistent, the monitoring data transmitting means 47 is disenabled.

### <Output remote station configuration>

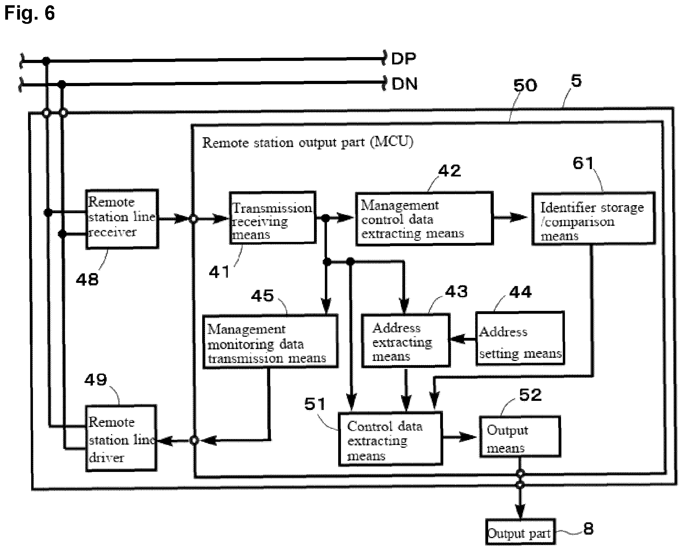

As shown in FIG. 6, the output remote station 5 comprises a remote station output part 50 for executing main arithmetic processing, and a remote station line receiver 48 and a remote station line driver 49 disposed between the remote station output part 50 and the transmission line, receives a voltage clock signal from the transmission line via the remote station line receiver 48, and outputs information basing on a control data to the output part 8 for operating or stopping the output part 8. Further, in case wherein receiving and sending data using management range are required, it sends the monitoring data via the remote station line driver 49. In FIG. 6, substantially the same parts as those of the input remote station 4 are denoted by the same reference numerals, and the description thereof will be simplified or omitted.

The remote station output part 50 has a transmission receiving means 41, a management control data extracting means 42, an address extracting means 43, an address setting means 44, a management monitoring data transmission means 45, a control data extracting means 51, an output means 52 and an identifier storage/comparison means 61.

Similarly to the input remote station 4, the output remote station 5 of this embodiment also comprises a MCU which is a microcomputer control unit as an internal circuit, and this MCU functions as the remote station output part 50.

The transmission receiving means 41 of the output remote station 5 passes the digital value of the voltage level of the voltage clock signal received from the remote station line receiver 48 to the management control data extracting means 42, to the address extracting means 43, to the management monitoring data transmission means 45, and to the control data extracting means 51.

Then, the address extracting means 43 having obtained the own station range start timing enables the control data extracting means 51. Further, in case wherein the own station range is composed of a plurality of data I/O ranges, the control data extracting means 51 is enabled for the period of the data I/O range every time the data I/O range appears until the own station range ends.

The control data extracting means 51 being enabled by identifier storage/comparison means 61, in case being enabled by the address extracting means 43, extracts the control data basing on the digital value of the voltage level of the voltage clock signal received from the transmission receiving means 41 and passes the control data to the output means 52.

The output means 52 outputs information basing on the control data received from the control data extracting means 51 to the output part 8, and operates or stops the output part 8.

The identifier storage/comparison means 61 of the remote station output part 5, in case the comparison identifier is received from the management control data extraction unit 42, stores the comparison identifier and enables the control data extracting means 51. Further, in case the operation identifier is received, the operation identifier and the comparison identifier are compared. Then, comparison is executed and, in case the operation identifier and the comparison identifier are inconsistent, the control data extracting means 51 is disenabled.

### <Input/output remote station configuration>

The input/output remote station 6 has the functions of both the input remote station 4 and the output remote station 5, and has a remote station input/output part having both the configurations of the remote station input part 40 and the remote station output part 50, then the configuration being substantially the same as the remote station input part 40 and the remote station output part 50, illustration and description thereof are omitted.

### < Procedure to transmit the comparison identifier and the operation identifier>

Referring to FIG. 1, procedure to transmit the comparison identifier and the operation identifier will be described.

At the timing when the processing for recognizing the addresses of the remote stations 4, 5, and 6 has executed, the master station 2 transmits the comparison identifier to all the recognized addresses by using the management data range.

In the remote stations 4, 5, and 6 that have received the comparison identifier, as described above, the monitoring data transmission means 47 or the control data extraction means 51 is enabled, and transmitting and receiving data with the master station 2 using the control and monitoring data range becomes possible (State shown in Fig.1 (a))

The comparison identifier is stored as non-volatile data in the remote stations 4, 5, and 6, and is also stored in case where the system is stopped because of maintenance or unnecessity of operation. Then, when the system is restarted, the master station 2 transmits an operation identifier to all of the remote stations 4, 5, and 6 by using the management data range. It should be noted that the timing wherein the operation identifier is transmitted may be appropriate depending on the use state or the like. For example, it may be set after a predetermined time has elapsed after the restart, or at the time of inputting a command to execute comparison.

In the remote stations 4, 5, and 6 that have received the operation identifier, the identifier storage/comparison means 61 performs comparison as described above. Then, in this case, the comparison result becomes a match, and transmitting and receiving data with the master station 2 using the control and monitoring data range becomes possible (State shown in Fig.1 (a))

As shown in FIG. 1B, in case where a new output remote station 5a is added during operation, the output remote station 5a corresponds to an address unrecognized remote station, and in the output remote station 5a not having received the comparison identifier the control data extracting means 51 is not enabled. Therefore, even if an address overlapping with the address corresponding to the data range allocated to the existing remote stations 4, 5, and 6 is accidentally set in the output remote station 5a that is the address unrecognized remote station, malfunction of the device relating to the output remote station 5a can be prevented.

The added output remote station 5a can be activate, after the addition, by executing a process for recognizing the address with the correct address set so that transmitting and receiving data with the master station 2 using the control and monitoring data range becomes possible.

In case where a remote station used in another system is diverted, there is a risk that a remote station having be capable of transmitting and receiving data with a master station using a control/monitoring data range in the previous system may work in the system of diversion target. Therefore, it is preferable that the comparison identifier is set so as to have a low possibility of being duplicated in different systems. For example, a numerical value obtained by adding a date and a time of setting to an identification number assigned to each system may be used.

### DESCRIPTION OF REFERENCE NUMERALAS

1 Control unit
2 Master station
4 Input remote station
5,5a Output remote station
6 Input/output remote station
7 Input part
8 Output part
9 Input/output part
11 Management determining part
12 Input/output unit
21 Output data part
22 Management data part
23 Timing generating part
24 Master station output part
25 Master station input part
26 Input data part
31 Oscillation circuit (OSC)
32 Timing generating means
33 Control data generating means
34 Line driver
35 Line receiver
36 Monitoring data extracting means
40 Remote station input part
41 Transmission receiving means
42 Management control data extracting means
43 Address extracting means
44 Address setting means
45 Management monitoring data transmission means
46 Input means
47 Monitoring data transmission means
48 Remote station line receiver
49 Remote station line driver
50 Remote station output part
51 Control data extracting means
52 Output means
61 identifier storage/comparison means
70 Input part integrated remote station
80 Output part integrated remote station

## Claims

1. A control and monitoring signal transmission system comprising a master station that transmits and receives data to and from a control part, and a plurality of remote stations that transmit and receive data to and from the master station by a transmission synchronization method via a common transmission line, wherein:
transmitting and receiving data between the master station and the remote stations is performed by superimposing data on a frame repeatedly transmitted from the master station,
the frame is time divided, control and monitoring data range wherein the transmission direction of the data is determined and allocated to each of the remote stations is provided, management data range for use in data transfer with all of the remote stations is provided separately from the control and monitoring data range,
numerical value as an address for obtaining the timing of the data range allocated to the own station in the control and monitoring data range is set for each of the remote stations,
the master station transmits a comparison identifier using the management data range at timing when a process for recognizing the address is executed,
the remote station enables data transfer using the control and monitoring data range when receiving the comparison identifier, stores the comparison identifier, and when the operation identifier is transmitted from the master station, the remote station enables or disables data transfer using the control and monitoring data range basing on a result of comparison between the operation identifier and the comparison identifier
